# EUROPEAN PATENT APPLICATION

(11) **EP 0 616 165 A1**
(43) Date of publication of application: **21.09.1994**
(21) Application number: 94104217.8
(22) Date of filing: 17.03.1994
(51) Int. Cl.: F16L 37/092

(54) **Pipe coupling**

(30) Priority: 19.03.1993 JP 85336/93
(71) Applicant: BRIDGESTONE FLOWTECH CORPORATION, Chuo-ku Tokyo 104 (JP)
(72) Inventor: Mine, Kenji, BRIDGESTONE FLOWTECH CORP., Chuo-ku, Tokyo 104 (JP); Kashima, Yasushi, BRIDGESTONE FLOWTECH CORP., Chuo-ku, Tokyo 104 (JP); Yokomatsu, Takahiro, BRIDGESTONE FLOWTECH CORP., Chuo-ku, Tokyo 104 (JP); Tanaka, Kunihiro, BRIDGESTONE FLOWTECH CORP., Chuo-ku, Tokyo 104 (JP)
(74) Representative: Goddar, Heinz J., Dr.

(57) **Abstract**

A pipe coupling is constructed such that: a pressing member (9) is supported by an inner collar (8) and presses an inserted pipe body (14) in a state in which the pressing member contacts an inclined surface of an outer collar (10); the inclined surface of the outer collar causes the pressing member to be moved in a radial direction thereof when the pressing member moves toward a deep portion within the pipe coupling, and restricts the movement of the pressing member in the radial direction when the pressing member moves in a direction of an exit; and the inner collar (8) is urged toward the exit by an elastic member. In the case of any type of rigid pipe body, the pipe coupling can be freely and easily connected to and removed from the same.

## Description

### BACKGROUND OF THE INVENTION

### FIELD OF THE INVENTION

The present invention relates to a pipe coupling for use in a pipe arrangement of a construction machine, a machine tool and the like, and particularly to a pipe coupling which is suitable for use in connecting and removing a pipe body in a small space where it is difficult to use a tool.

### DESCRIPTION OF THE RELATED ART

For use with a pipe body which is made of relatively flexible synthetic resin or rubber, there has been proposed a pipe coupling which makes it possible to connect and remove a pipe body in a relatively simple manner.

However, when used with a relatively hard pipe body such as a polyvinyl chloride-coated hose, which is also made of synthetic resin as described above, or a metal pipe or the like, a pipe coupling which can be freely connected to and removed from such a hard pipe, has not been put to practical use.

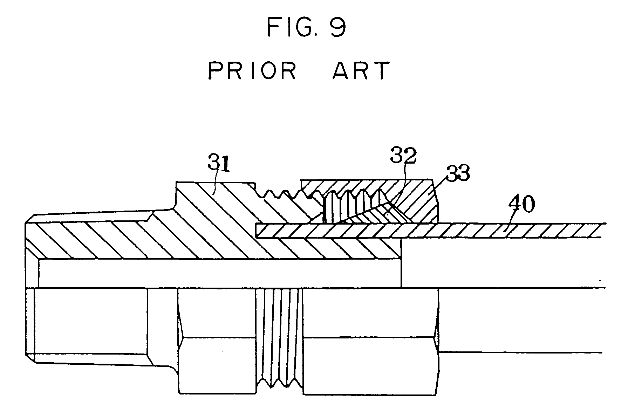

Fig. 9 shows one example of this type of pipe coupling, which allows coupling by causing a bite piece 32 to bite a pipe body 40.

A cap nut 33 threadedly engaged with a female member 31 causes the bite piece 32 to be pressed against and to bite a surface of the pipe body 40. Thus, even if the cap nut 33 is loosened, the bite piece 32 is not easily separated from the pipe body 40, making it nearly impossible to remove the pipe body 40 from the pipe coupling. Further, if the pipe body 40 is removed from the pipe coupling, the surface of the pipe body 40 is damaged. For this reason, when the damaged pipe body 40 is re-used, there is a possibility that the fluid flowing through the pipe body 40 may leak out via the damaged portion thereof.

Therefore, a pipe coupling which is suitable for use with a metal pipe or the like and which can be freely connected to and removed from the metal pipe or the like, is not in practical use.

### SUMMARY OF THE INVENTION

In view of the aforementioned, it is an object of the present invention to provide a pipe coupling for use with a pipe having a relatively high rigidity, such as a metal pipe, in which the pipe coupling can be connected to and removed from this kind of pipe in a simple manner.

In accordance with the present invention, there is provided a pipe coupling comprising: a cylindrical female member; an outer collar which is cylindrical and which is formed so as to be continuous with the female member, and which has an inclined surface at an inner peripheral surface thereof, the inclined surface being formed such that a diameter thereof at the side of a deep portion within the female member is large; an inner collar which is cylindrical and which is provided so as to move within the outer collar in an axial direction of the outer collar; a pressing member, which is supported by the inner collar and provided so as to move together with the inner collar in an axial direction of the inner collar, contacting the inclined surface of the outer collar and pressing an outer peripheral surface of an inserted pipe body, the inclined surface of the outer collar causing the pressing member to be moved in a radial direction thereof when the pressing member moves toward a deep portion within the female member and restricting the movement of the pressing member in the radial direction when the pressing member moves toward an exit; and an elastic member provided within any one of the female member and the outer collar and urging the inner collar toward the exit.

Preferably, a seal member, the elastic member and the pressing member supported by the inner collar are sequentially arranged at an inner peripheral surface of the female member from the side of a deep portion, i.e., the portion, within the female member, which a leading end of an inserted pipe body makes contact. Further, in order that the inner collar may be moved from the outside, preferably, a leading end of the inner collar projects out from a leading end of the outer collar.

Generally, a hard ball is employed as the above-described pressing member. Further, it is preferable that a stepped portion which abuts against a leading end of an inserted pipe body is formed in the deep portion of the female member. In addition, desirably, the female member and the outer collar are threadedly fitted to each other so that the position of the outer collar can be adjusted.

As an elastic member used in the present invention, a coil spring, a disc spring, a cylindrical rubber elastic member and the like may be employed.

The inner collar and the outer collar are each made of synthetic resin or metal. Particularly, in the outer collar, a tapered hole of which the diameter is large at the side of an inner portion of the outer collar is formed by punching, and the pressing member such as a ball is inserted into the tapered hole. When the inner collar is made of synthetic resin, a ball is set in a mold for molding the inner collar. The ball, i.e., the pressing member, may be embedded in the molded inner collar.

Since the present invention is constructed in the above-described manner, it becomes very easy to connect and remove a pipe body having a high hardness.

Connection between the pipe coupling of the present invention and a pipe body such as a metal pipe is effected by inserting the pipe body from the leading end of the inner collar of the female member. This is due to the pressing member, for example, a ball which is embedded in the inner collar, contacting the outer peripheral surface of the pipe body. The ball, together with the inner collar, is pushed toward the leading end of the inner collar by the elastic member. Meanwhile, this ball contacts the inclined surface of the outer collar and the pressing force of the ball is directed toward the surface of the pipe body. As a result, the connection between the pipe coupling and the pipe body is maintained.

On the other hand, an operation for removing the pipe body from the pipe coupling is performed as described below.

In the state in which the pipe coupling and the pipe body are connected to each other as described above, the leading end of the inner collar is pushed toward the deep portion of the female member, so that the ball which contacts the inclined surface of the outer collar is moved together with the inner collar toward the inward direction.

For this reason, the ball is released from the state in which the ball contacts the outer collar, and the pressing force of the ball, to be applied to the surface of the pipe body, is released. By pulling the pipe body out of the pipe coupling while maintaining the above-described state, the pipe body can be easily removed from the pipe coupling.

Then, when a force for pressing the inner collar is lessened after the pipe body is removed, the inner collar is pushed back to the original state by the elastic member. In this way, each operation of connecting and removing the pipe body is effected repeatedly.

Since the pipe coupling of the present invention has the above-described structure, even if a pipe body has a high hardness, it is possible to freely connect and remove the pipe body. In particular, in a small space, it becomes easy to connect and remove the pipe body. As a result, a remarkably great effect is obtained in the industrial field.

### BRIEF DESCRIPTION OF THE DRAWINGS

Fig. 1 is a cross-sectional view illustrating a pipe coupling according to a first embodiment of the present invention.

Fig. 2 is a partial cross-sectional view illustrating the relationship between an inner collar and a ball.

Fig. 3 is a partial cross-sectional view of another example illustrating the relationship between the inner collar and the ball.

Fig. 4 is a partial cross-sectional view illustrating a state in which a pipe body is pulled out from the pipe coupling of the present invention.

Fig. 5 is a partial cross-sectional view of a modified example illustrating the relationship between the inner collar and an outer collar.

Fig. 6 is a view illustrating a cross-section of one-half of a pipe coupling according to a second embodiment of the present invention.

Fig. 7 is a view illustrating a cross-section of one-half of a pipe coupling according to a third embodiment of the present invention.

Fig. 8 is a view illustrating a cross-section of one-half of a pipe coupling according to a fourth embodiment of the present invention.

Fig. 9 is a view illustrating a cross-section of one-half of a conventional pipe coupling.

### DESCRIPTION OF THE PREFERRED EMBODIMENTS

A description of a pipe coupling of the present invention will be described hereafter.

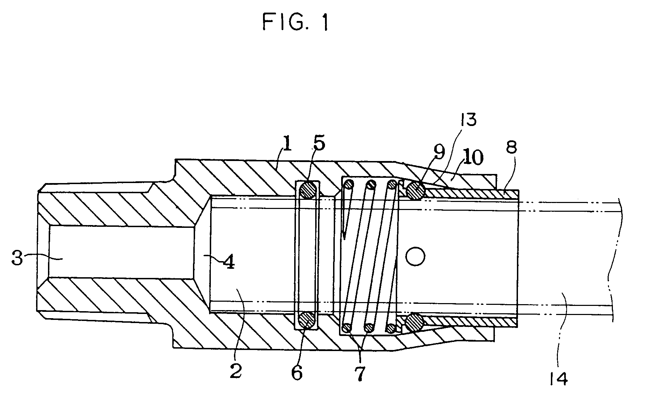

Fig. 1 is a cross-sectional view illustrating a pipe coupling according to a first embodiment of the present invention.

A female member 1 which forms a base body of the pipe coupling is provided with a through hole 2 having a large diameter, and a through hole 3 having a small diameter. A stepped portion 4 is formed between these through holes 2 and 3. Next, the through hole 2 is provided with a groove 5 near a leading end thereof, and a seal member 6 such as an O ring is fitted into the groove 5. A coil spring 7 is disposed further toward an exit than the seal member 6, and an inner collar 8 made of synthetic resin, together with a pressing member, i.e., a ball 9, is disposed even further toward the exit than the coil spring 7. The coil spring 7, the inner collar 8 and the ball 9 are all covered by an outer collar 10. The collar 10 extends from and is formed integrally with the female member 1, and a leading end of the collar 10 is reduced in diameter. Alternatively, a separate outer collar may be fixed to the female member 1 by brazing or may be screwed thereto. In the case of the outer collar 10 being screwed to the female member 1, the position of the outer collar 10 can be adjusted in accordance with the degree to which the outer collar 10 and the female member 1 are screwed together.

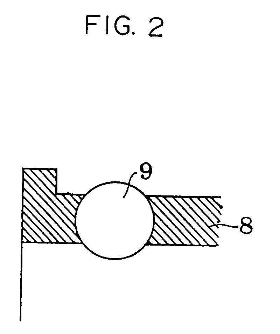

The relationship between the inner collar 8 and the ball 9 is such that the ball 9 is fitted into the inner collar 8 as illustrated in Fig. 2. This structure is formed by setting the ball 9 into a mold at the time of molding the inner collar 8 so that the ball 9 can be fitted into the inner collar 8.

In this case, preferably, a crack may be formed in the inner collar 8 at a leading end thereof.

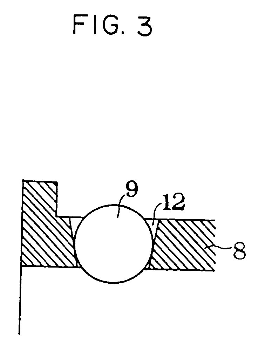

Fig. 3 illustrates a modified example of the relationship between the inner collar 8 and the ball 9. In this structure a tapered hole 12 is formed in the inner collar 8, and the ball 9 is fitted into the hole 12 from an outer peripheral side of the inner collar 8.

Returning to Fig. 1, the outer collar 10 has an inclined surface 13 with respect to the above-described ball 9. The inclined surface 13 is formed such that the diameter thereof at the side of a deep portion, i.e., the portion, within the female member 1, with which a leading end of an inserted pipe body makes contact, is large. The inclined surface 13 causes the movement of the ball 9 to be restricted, and causes a contact force of the ball 9 with respect to a pipe body to be exhibited.

Against the stepped portion 4 provided in the deep portion within the female member 1, a leading end of an inserted pipe body is brought into abutment. Thus, if the leading end of the pipe body abuts against the stepped portion 4, it can be determined that the pipe body has been completely inserted.

Fig. 1 illustrates the state in which a pipe body 14 indicated by the dotted lines is inserted into the inner collar 8. The position of the pipe body 14 is determined by causing the leading end thereof to abut against the stepped portion 4. Here, when force is applied from the outside in order to pull out the pipe body 14 from the state shown in Fig. 1, or when a fluid flows into the pipe body 14 in the state shown therein, namely, when a force acts in a direction in which the pipe body 14 is pulled out, the ball 9 is pushed against the inclined surface 13 of the outer collar 10 by the coil spring 7. At the same time, the inclined surface 13 of the outer collar 10 causes the ball 9 to press the surface of the pipe body 14. As a result, the pulling of the pipe body 14 out of the pipe coupling is prevented. When the pipe body 14 is about to be pulled out by a stronger force, or when the pressure within the pipe body 14 becomes high, the ball 9 is pressed strongly by the inclined surface 13 of the outer collar 10 and strongly presses the surface of the pipe body 14. As a result, the ball 9 may be dug in the surface of the pipe body 14 such that the pipe body 14 can be firmly held by the ball 9. The ball 9 is made of any material whose hardness is larger than that of the pipe body 14.

On the other hand, when the pipe body 14 is removed from the pipe coupling, a leading end of the above-described inner collar 8, which projects out from the leading end of the outer collar 10, is used. Namely, the pipe body 14 can be pulled out by pushing the leading end of the inner collar 8 in the direction of the female member 1. In other words, the inner collar 8 can be moved in the direction of the female member 1 by pushing the projected portion of the inner collar 8, thereby causing a pressing force of the ball 9 to be released.

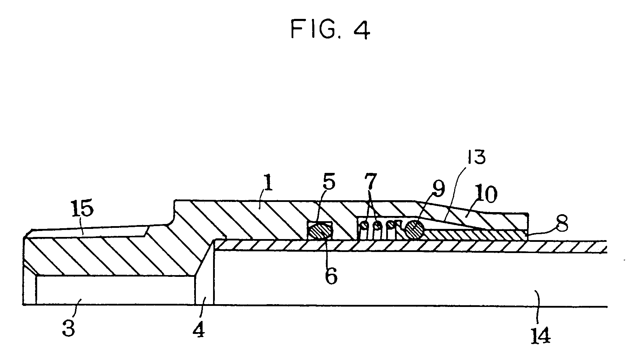

The above-described state is shown in Fig. 4 in which the inner collar 8 is moved toward the side of the female member 1, so that the ball 9, together with the inner collar 8, also moves toward the side of the female member 1. This means that the state in which the ball 9 contacts the inclined surface 13 of the outer collar 10 is released. For this reason, the pressing force of the ball 9, which is applied to the surface of the pipe body 14, is released. Accordingly, the pipe body 14 does not receive the pressing force of the ball 9 so as to be easily pulled out of the female member 1.

In Fig. 4, the female member 1 is provided with a male screw 15 at the side of the through hole 3. The male screw 15 is connected to an illustrated pipe body or the like.

Meanwhile, by providing the above-described structure at the side of the through hole 3 of the female member 1 (not shown), a pipe coupling is obtained which can be connected to and removed from any pipe body.

Further, as the seal member 6, an O ring of which the cross-sectional configuration is circular, is shown herein. However, the present invention is not limited to the same, and any seal member, for example, a cross-section thereof is an L-shaped or X-shaped configuration, may be applied.

Moreover, the relationship between the inner collar 8 and the outer collar 10 does not always need to be set such that the inner collar 8 projects out from the outer collar 10, and it suffices that the inner collar 8 can be moved toward the side of the female member 1 from the outside.

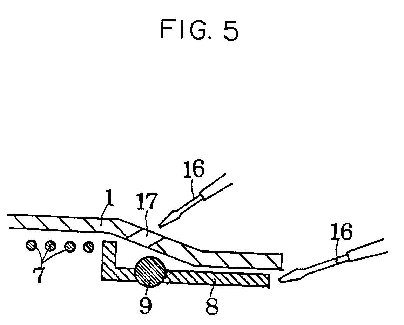

Fig. 5 is a partial cross-sectional view illustrating the example as described above. It suffices that, although the leading end of the inner collar 8 does not project out from the outer collar 10, the leading end of the inner collar 8 can be pushed by a screwdriver 16 or the like. In addition, a small hole 17 is formed in the outer collar 10, and the screwdriver 16 or the like is pushed into the small hole 17, thereby causing the inner collar 8 to be moved toward the side of the female member 1.

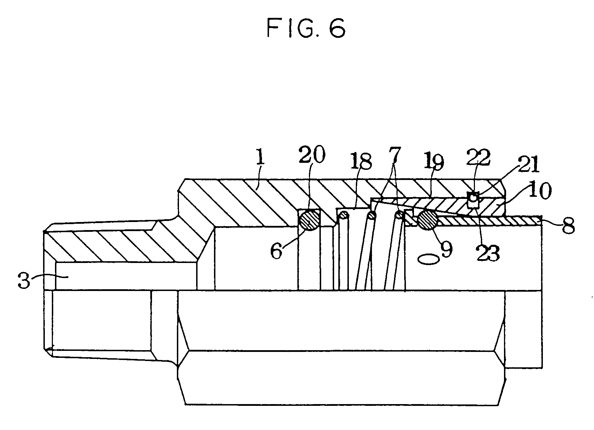

Fig. 6 is a view illustrating a cross-section of one-half of a pipe coupling according to a second embodiment of the present invention. In this embodiment, an inner peripheral surface of the female member 1 is formed by a plurality of stepped portions. Namely, the coil spring 7 is fitted into a second stepped portion 18, and the outer collar 10 is fitted into a third stepped portion 19. Then, an O ring 6 is fitted into a groove 20 formed in the inner peripheral surface of the female member 1. In addition, an engaging member (a stop ring) 21 is fitted into a groove 22 formed in the inner peripheral surface of the third stepped portion 19 of the female member 1 and a groove 23 formed in the outer collar 10. As a result, the relative movement of the female member 1 and the outer collar 10 in their axial directions is prevented.

Each operation of connecting and removing the pipe body can be effected in the same way as the first embodiment.

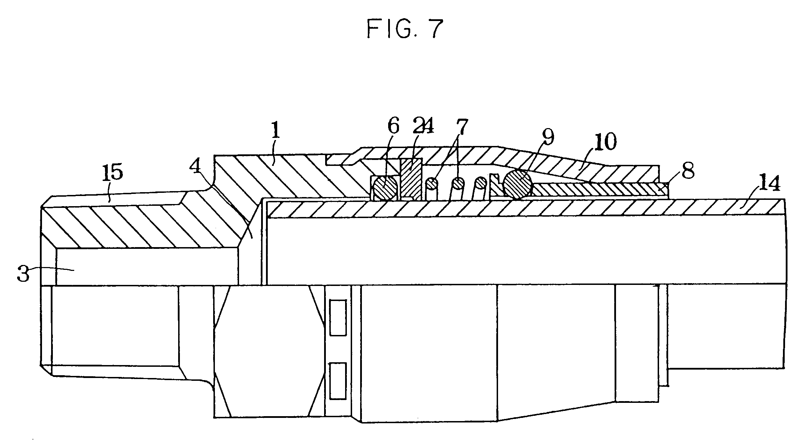

Fig. 7 is a view illustrating a cross-section of one-half of a pipe coupling according to a third embodiment of the present invention. In this embodiment, the seal member 6 located at the inner peripheral surface of the female member 1 is supported by a washer 24 against the seal member 6.

Each operation of connecting and removing the pipe body can be effected in the same way as the first embodiment.

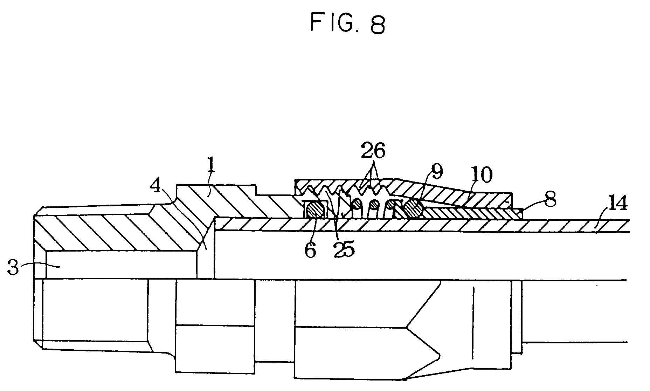

Fig. 8 is a view illustrating a cross-section of one-half of a pipe coupling according to a fourth embodiment of the present invention. In this embodiment, the female member 1 and the outer collar 10 are threadedly engaged with each other. Other structures are similar to those of the first embodiment. Namely, the female member 1 and the outer collar 10 are screwed together by means of a male screw 25 of the female member 1 and a female screw 26 of the outer collar 10. The position where the inclined portion 13 of the outer collar 10 and the ball 9 contact each other can be adjusted in accordance with the degree to which the female member 1 and the outer collar 10 are screwed together.

Further, each operation of connecting and removing the pipe body can be effected in the same way as the first embodiment.

## Claims

1. A pipe coupling comprising:
a cylindrical female member;
an outer collar which is cylindrical and which is formed so as to be continuous with said female member;
an inner collar which is cylindrical and which is provided so as to move within said outer collar in an axial direction of said outer collar;
a pressing member supported by said inner collar so as to press an inserted pipe body;
movement-restricting means which generates a pressing force of said pressing member and restricts the movement of said inner collar; and
an elastic member provided within any one of said female member and said outer collar and urging said inner collar toward an exit.

2. A pipe coupling according to claim 1, wherein said movement-restricting means is formed by an inclined surface which is formed at an inner peripheral surface of said outer collar such that a diameter of said inclined surface at the side of a deep portion within said female member is large, and which causes said pressing member to generate a pressing force by said pressing member abutting said inclined surface.

3. A pipe coupling according to claim 1, wherein said elastic member and said inner collar are sequentially arranged from the side of the deep portion within said female member.

4. A pipe coupling according to claim 3, further comprising a seal member provided at an inner peripheral surface of said female member and further toward the deep portion within said female member than said elastic member.

5. A pipe coupling according to claim 1, wherein said inner collar can be moved from the outside.

6. A pipe coupling according to claim 1, wherein said pressing member comprises a plurality of ball-shaped members.

7. A pipe coupling according to claim 1, wherein a stepped portion is formed in the deep portion within said female member such that a leading end portion of an inserted pipe body contacts said stepped portion.

8. A pipe coupling according to claim 2, further comprising alternation means which can alter a position where said pressing member and said inclined surface contact each other.

9. A pipe coupling comprising:
a cylindrical female member;
an outer collar which is cylindrical and which is formed so as to be continuous with said female member, and which has an inclined surface at an inner peripheral surface thereof, said inclined surface being formed such that a diameter thereof at the side of a deep portion within said female member is large;
an inner collar which is cylindrical and which is provided so as to move within said outer collar in an axial direction of said outer collar;
a pressing member, which is supported by said inner collar and provided so as to move together with said inner collar in an axial direction of said inner collar, contacting the inclined surface of said outer collar and pressing an outer peripheral surface of an inserted pipe body, the inclined surface of said outer collar causing said pressing member to be moved in a radial direction thereof when said pressing member moves toward a deep portion within said female member and restricting the movement of said pressing member in the radial direction when said pressing member moves toward an exit; and
an elastic member provided within any one of said female member and said outer collar and urging said inner collar toward the exit.

10. A pipe coupling according to claim 9, wherein said elastic member and said inner collar are sequentially arranged from the side of the deep portion.

11. A pipe coupling according to claim 10, further comprising a seal member provided at an inner peripheral surface of said female member and further toward the deep portion within said female member than said elastic member.

12. A pipe coupling according to claim 9, further comprising a supporting member which supports said seal member from the side of the exit.

13. A pipe coupling according to claim 9, wherein an end portion of said inner collar in a direction of the exit projects further toward the exit than an end portion of said outer collar in the direction of the exit.

14. A pipe coupling according to claim 9, wherein said outer collar is provided with a through hole formed in said inclined surface.

15. A pipe coupling according to claim 9, wherein said pressing member comprises a plurality of ball-shaped members.

16. A pipe coupling according to claim 15, wherein said plurality of ball-shaped members is each fitted into said inner collar.

17. A pipe coupling according to claim 16, wherein a tapered hole is formed in said inner collar such that an opening for said hole in an inner peripheral surface of said inner collar is smaller than a diameter of said ball-shaped member and an opening for said hole in an outer peripheral surface thereof is larger than the diameter of said ball-shaped member, said ball-shaped member being fitted into said tapered hole from a side of the outer peripheral surface of said inner collar.

18. A pipe coupling according to claim 9, wherein a stepped portion is formed in the deep portion within said female member such that a leading end portion of an inserted pipe body contacts said stepped portion.

19. A pipe coupling according to claim 9, wherein a stepped portion for accommodating said elastic member and a stepped portion for accommodating said outer collar are respectively formed at the inner peripheral surface of said female member.

20. A pipe coupling according to claim 9, wherein said outer collar is provided at an inner peripheral surface of said female member, and an engaging member for preventing relative movement of said outer collar and said female member in their axial directions is disposed between said outer collar and said female member.

21. A pipe coupling according to claim 9, wherein said female member and said outer collar are threadedly engaged with each other.

22. A pipe coupling according to claim 9, wherein said pressing member is formed into such a shape and made of such a material as to be dug in the surface of said pipe body when a strong force acts in a direction in which said pipe body is pulled out.
